(19) Europäisches Patentamt

European Patent Office

Office européen des brevets

(11) **EP 0 857 706 A1**

(12) **EUROPEAN PATENT APPLICATION**
published in accordance with Art. 158(3) EPC

(43) Date of publication:
**12.08.1998 Bulletin 1998/33**

(51) Int. Cl.$^6$: **C04B 41/53**, C09K 13/08

(21) Application number: **97915488.7**

(86) International application number:
**PCT/ES97/00081**

(22) Date of filing: **01.04.1997**

(87) International publication number:
**WO 97/49648 (31.12.1997 Gazette 1997/57)**

(84) Designated Contracting States:
**AT BE CH DE DK FR GB GR IE IT LI NL PT SE**

(30) Priority: **25.06.1996 ES 9601418**

(71) Applicants:
 • **The Solid Step Company S.L.**
 **28036 Madrid (ES)**

• **Lozano Coco, Julio A.**
 **28036 Madrid (ES)**

(72) Inventor: **LOZANO COCO, Julio A.**
 **E-28036 Madrid (ES)**

(74) Representative:
 **Lahidalga de Careaga, Jose Luis**
 **Goya, 143**
 **28009 Madrid (ES)**

(54) **COMPOSITIONS FOR THE TREATMENT OF MINERAL SURFACES CONTAINING SILICON**

(57) Said compositions comprise an aqueous solution of fluorhydric acid (0.5-6%) and a fluorinated non-ionic surfactant (0.01-0.1%). The impregnation of a mineral surface which contains silicon with one of said compositions provides for the formation of microscopic cavities in the treated surface, thereby, improving the adherence of said surfaces in wet conditions, marking them non-slippery. Said compositions are useful to produce non-slipping pavings and floorings.

EP 0 857 706 A1

## Description

## FIELD OF THE INVENTION

The invention refers to formulations for the treatment of natural mineral surfaces containing silicon. Specifically, the invention provides some formulations based on hydrofluoric acid and a non-ionic fluorinated surfactant, which by reacting with a surface of mineral nature containing silicon, modifies the physical characteristics thereof, such that its adhesion when wet is increased preventing slipping on said surface.

## BACKGROUND OF THE INVENTION

Compositions for the treatment of surfaces of a mineral nature containing silicon are well known, for example, pavements based on aqueous solutions of hydrofluoric acid (HF). This acid can react with the silicon contained in said mineral surface producing a silicon tetrafluoride gas (SiF4) and water, according to the reaction:

$$4HF + SiO_2 \rightarrow SiF_4 + 2H_2O$$

The production of $SiF_4$ causes microscopic concavities in the treated surface, activating vents, and are responsible for non-slipping characteristics thereof.

The application of aqueous solutions of HF on mineral pavements is quite complicated and presents some drawbacks, since, in general, HF reacts differently with distinct mineral pavements, leaving the treated surfaces irregularly attacked and with frequent appearance of stained areas due to the irregular attack of the acid, which not only affects its visual appearance but the non-slipping characteristics of the pavement treated.

As a result, the need of having a suitable formulation for the treatment of surfaces with a mineral nature containing silica, which surpass the drawbacks of difficult application and irregular attack of the acid on the previously indicated mineral surface continues.

## DETAILED DESCRIPTION OF THE INVENTION

The invention provides compositions suitable for the treatment of surfaces of a mineral nature containing silicon, based on hydrofluoric acid and a non-ionic fluorinated surfactant, which by means of reaction with a surface of a mineral nature containing silicon, modifies the physical characteristics thereof, such that its adherence when wet increases preventing slipping on said surface.

The compositions provided by this invention include an aqueous solution of hydrofluoric acid, with concentrations between 0.5% and 6%, containing a non-ionic fluorinated surfactant, in concentrations between 0.01% and 1.1% with respect to the total composition.

As non-ionic fluorinated surfactants, the commercially available fluorinated alkyl polyoxyethyleneethanols may be used. These fluorinated surfactants are characterized for their capacity to contribute excellent wetting and providing extension and leveling properties to a wide range of systems with minimum foam production. Likewise, it has excellent surface activity in water and aqueous solutions of acids, reducing the surface tension of the HF solution at low and very low concentrations and is resistant to the acidity produced by the HF solution (pH approximately 4).

The compositions provided by this invention, may easily be prepared by adding the relevant amount of non-ionic fluorinated surfactant in aqueous or hydro-alcoholic solution (isopropanol/water 50/50) to the aqueous solution of hydrofluoric acid.

Tests performed by impregnating different surfaces of a mineral nature containing silica with different formulations provided by this invention, have shown that a reaction occurs with said surface accompanied by the release of $SiF_4$ modifying the physical characteristics of said surface, increase its adhrence when wet and preventing slipping on the treated surface. Specifically, it has been observed that the treatment of different surfaces of a mineral nature containing silicon, with different formulations of this invention produce a regular attack of the surfaces treated and the regular formation of microscopic concavities, which give anti-skid properties to the surfaces treated, without negatively affecting their appearance. Likewise, said studies have shown the versatility of these formulations and the possibility of adapting them to the type of pavement to be treated. Consequently, the compositions provided by this invention are suitable for the treatment of surfaces of a mineral nature containing silicon to obtain surfaces with anti-skid properties.

## EXAMPLE 1

Different formulations based on HF and a fluorinated non-ionic surfactant were prepared by adding, at room temperature and with stirring, different amounts of fluorinated non-ionic surfactants in aqueous solution to different aqueous solutions of HF, with concentrations between 0.5% and 6% until reaching surfactant concentrations in the aqueous solution of HF, between 0.01% and 0.1% in relation to the total.

## EXAMPLE 2

With the formulations obtained in Example 1, samples of different pavements containing silicon were impregnated for sufficient time for the HF to react with the silicon. Then, after washing with water, the regular formation of microscopic concavities were observed on the surface of all the pavements treated. The appearance of the pavements treated had suffered no adverse transformation whatsoever.

## Claims

1. Compositions for the treatment of surfaces of a mineral nature containing silicon, comprising a solution of hydrofluoric acid and a fluorinated non-ionic surfactant.

2. Compositions for the treatment of surfaces of a mineral nature containing silicon, according to the first claim, including an aqueous solution of hydrofluoric acid with a concentration between 0.5% and 6% and, a fluorinated non-ionic surfactant with a concentration between 0.01% and 0.1% with respect to the total formulation.

3. Compositions for the treatment of surfaces of a mineral nature containing silicon, according to the first claim, in which the fluorinated non-ionic surfactant is a fluorinated alkyl polyoxyethylenethanol.

4. Compositions for the treatment of surfaces of a mineral nature containing silicon, according to any of the claims 1 to 3, including the adhesion of the suitable amount of fluorinated non-ionic surfactant to the solution of hydrofluoric acid.

## INTERNATIONAL SEARCH REPORT

| | |
|---|---|
| International application No. | PCT/ES 97/00081 |

### A. CLASSIFICATION OF SUBJECT MATTER

$IPC^6$: C04B 41/53, C09K 13/08

According to International Patent Classification (IPC) or to both national classification and IPC

### B. FIELDS SEARCHED

Minimum documentation searched (classification system followed by classification symbols)

$IPC^6$: C04B C09K C03C E01C

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 4055458 A (H. NIEDERPRÜM ET AL.) 25 October 1977 (25.10.77), Column 1, line 36-44; Column 3, line 18-40; Column 5, line 51-54 | 1,2,4 |
| A | | 3 |
| X | PROCEEDINGS OF THE 39TH ANNUAL FREQUENCY SYMPOSIUM, May 1985 PHILADELPHIA PENNSYLVANIA, Pages 276-281, R.J. BRANDMAYR ET AL.: "Chemical polishing in etching solutions that contain surfactants" Page 276, line 38-43; Page 277, column left, line 42-51 table I | 1,2,4 |
| X | US 4795582 A (T. OHMI ET AL) 3 January 1989 (03.01.89) Column 4, line 24-29; table I | 1-4 |
| A | GB 117221 A (SLIP-PRUF SERVICE CORP.) 19 June 1968 (19.06.68), Page 1, line 7-11; Page 1, line 27-36; Claims 1,7 | 1-4 |
| A | US 3847688 A (L.O. GILLICE) 12 November 1974 (12.11.74) Claims 1,4 | 1-4 |

| [X] Further documents are listed in the continuation of Box C. | [X] See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 July 1997 (17.07.97) | 23 July 1997 (23.07.97) |

| Name and mailing address of the ISA/ | Authorized officer |
|---|---|
| S.P.T.O.<br>Facsimile No. | Telephone No. |

Form PCT/ISA/210 (second sheet) (July 1992)

## INTERNATIONAL SEARCH REPORT

| International application No. |
|---|
| PCT/ES 97/00081 |

| C (Continuation). | DOCUMENTS CONSIDERED TO BE RELEVANT | |
|---|---|---|
| Category* | Citation of document, with indication, where appropriate, of the relevant passages | Relevant to claim No. |
| A | EP 0278628 A (OLIN CORPORATION) 17 August 1988 (17.08.88), Claims 1,3 | |

Form PCT/ISA/210 (continuation of second sheet) (July 1992)